# EUROPEAN PATENT SPECIFICATION

(11) **EP 3 698 989 B1**
(45) Date of publication and mention of the grant of the patent: **14.04.2021**
(21) Application number: 20157123.9
(22) Date of filing: 13.02.2020
(51) Int. Cl.: B60C 13/00

(54) **TIRE**
REIFEN
PNEUMATIQUE

(30) Priority: 19.02.2019 JP 2019027583
(43) Date of publication of application: 26.08.2020
(73) Proprietor: Sumitomo Rubber Industries, Ltd., Kobe-shi, Hyogo-ken 651-0072 (JP)
(72) Inventor: ISHIGAKI, Yuichi, Kobe-shi, Hyogo 651-0072 (JP); SAKAGUCHI, Tetsuya, Kobe-shi, Hyogo 651-0072 (JP); FUJITA, Hiroshi, Kobe-shi, Hyogo 651-0072 (JP)
(74) Representative: Manitz Finsterwald Patent- und Rechtsanwaltspartnerschaft mbB

(56) References cited:
- JP-A- 2009 512 584

## Description

### BACKGROUND OF THE INVENTION

### Field of the Invention

The present invention relates to a tire provided with a decorative portion.

### Description of the Background Art

Japanese Laid-Open Patent Publication (translation of PCT application) No. 2009-512584 discloses a tire having a large number of tufts of substantially conical shape provided on a side wall. In such a type of tire, the tufts form a kind of texture, enhancing black color of the side wall. Thus, for example, the contrast with a mark such as a tire name is increased to improve the visibility of the mark.

However, in recent years, further increasing the contrast to further improve the visibility has been desired.

### SUMMARY OF THE INVENTION

The present invention has been made in view of the above circumstances, and an object of the present invention is to provide a tire having improved visibility.

The present invention is directed to a tire including a decorative portion on at least a part of a visible outer surface thereof, wherein: a plurality of micro projections are arranged on the decorative portion; at least one of the micro projections includes a recess and an outer wall portion that surrounds the recess to form a projection top portion; and a thickness of the outer wall portion at the projection top portion varies in a circumferential direction.

In the tire according to the present invention, preferably, the micro projections are arranged on the decorative portion at a density of 2 to 10 projections per 1 mm².

In the tire according to the present invention, preferably, the micro projection has a first cross-sectional shape orthogonal to a projection height direction, and the recess has a second cross-sectional shape orthogonal to a depth direction thereof, and
the first cross-sectional shape and the second cross-sectional shape have different shapes.

In the tire according to the present invention, preferably, the first cross-sectional shape has a circular shape or an elliptical shape.

In the tire according to the present invention, preferably, the second cross-sectional shape has a polygonal shape.

In the tire according to the present invention, preferably, the first cross-sectional shape is smaller at an upper end portion side than at a lower end portion side.

In the tire according to the present invention, preferably, the first cross-sectional shape includes a portion in which the first cross-sectional shape becomes gradually smaller toward the upper end portion side.

In the tire according to the present invention, preferably, the first cross-sectional shape includes a portion in which the first cross-sectional shape becomes smaller stepwise toward the upper end portion side.

In the tire according to the present invention, preferably, at the portion in which the first cross-sectional shape becomes smaller stepwise, at least parts of one first cross-sectional shape and another first cross-sectional shape are in contact with each other.

In the tire according to the present invention, preferably, the second cross-sectional shape is larger at an upper end portion side than at a lower end portion side.

In the tire according to the present invention, preferably, the second cross-sectional shape includes a portion in which the second cross-sectional shape becomes gradually larger toward the upper end portion side.

In the tire according to the present invention, preferably, the second cross-sectional shape includes a portion in which the second cross-sectional shape becomes larger stepwise toward the upper end portion side.

In the tire according to the present invention, preferably, at the portion in which the second cross-sectional shape becomes larger stepwise, at least parts of one second cross-sectional shape and another second cross-sectional shape are in contact with each other.

In the tire according to the present invention, preferably, the decorative portion includes a recessed and projecting portion having a ten-point average roughness (Rz) of 0.01 to 0.05 mm, between the micro projections.

A plurality of micro projections are arranged on the decorative portion of the tire according to the present invention, and at least one of the micro projections includes a recess and an outer wall portion that surrounds the recess to form a projection top portion.

Thus, light applied to the projection top portion of the micro projection is mainly reflected on the upper end surface of the outer wall portion, and light reflection is suppressed at the recess. Furthermore, since the thickness at the projection top portion varies in the circumferential direction, reflection on the upper end surface, reflection on the outer surface of the outer wall portion, and reflection on the inner surface of the recess are not uniform.

Owing to a synergistic effect by these effects, the decorative portion can be made to look darker (blacker) as compared to micro projections that have no recess at an upper end thereof and that have, for example, a truncated cone shape. As a result, the contrast with a non-decorative portion adjacent to the decorative portion, such as a mark, is increased, so that the visibility of the mark can be improved.

### BRIEF DESCRIPTION OF THE DRAWINGS

FIG. 1 is a partial side view showing an embodiment of the tire according to the present invention;
FIG. 2 is an enlarged perspective view of a decorative portion in FIG. 1;
FIG. 3 is a perspective view of a micro projection;
FIGS. 4(a) and (b) are a plan view and a side view of the micro projection;
FIGS. 5(a) to (c) are each a side view of a micro projection of another embodiment and a plan view showing a cross-sectional shape of the micro projection at a line A-A in the plan view;
FIGS. 6(a) and (b) are each a side view of a micro projection of still another embodiment and a plan view showing a cross-sectional shape of a recess at a line B-B in the side view;
FIGS. 7(a) and (b) are each a perspective view of a micro projection of still another embodiment;
FIGS. 8(a) to (e) are each a side view of a micro projection of still another embodiment; and
FIGS. 9(a) to (e) are each a conceptual diagram showing first and second cross-sectional shapes of still another embodiment.

### DESCRIPTION OF THE PREFERRED EMBODIMENTS

Hereinafter, embodiments of the present invention will be described in detail.

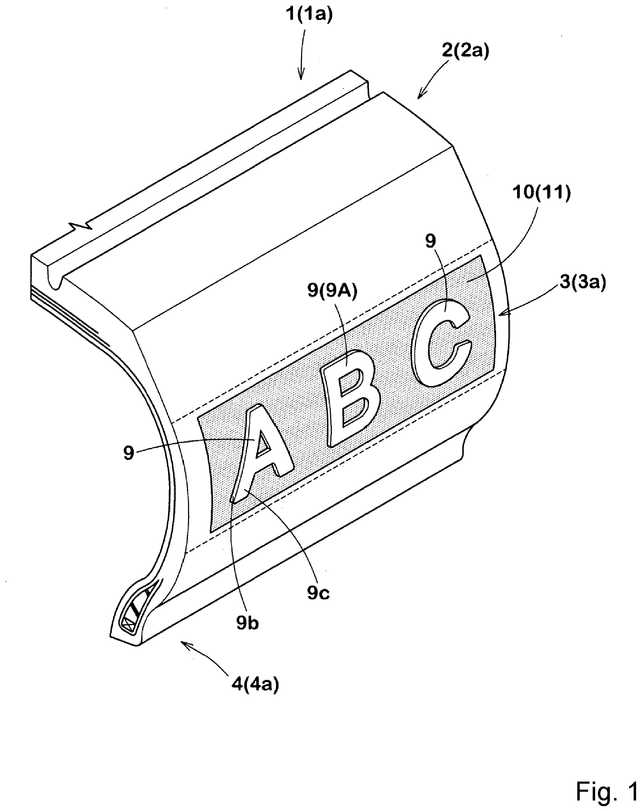

FIG. 1 is a perspective view of a tire 1 showing an embodiment of the present invention. In the present embodiment, as a preferable mode, a pneumatic tire 1 for a passenger car is shown. However the present invention can be applied to a pneumatic tire 1 for a motorcycle, a heavy-duty vehicle or another category.

As shown in FIG. 1, the tire 1 of the present embodiment has a visible outer surface 1a. The visible outer surface 1a is a surface that is visible from the outside when the tire 1 is mounted to a rim (not shown). The outer surface 1a includes, for example, an outer surface 2a of a tread portion 2, an outer surface 3a of a sidewall portion 3, and an outer surface 4a of a bead portion 4.

In the present embodiment, the tire 1 has a decorative portion 10 and non-decorative portions 9 adjacent to the decorative portion 10, on a part of the outer surface 1a. In the present embodiment, the non-decorative portions 9 and the decorative portion 10 are provided on the outer surface 3a of the sidewall portion 3. However, the positions of the non-decorative portions 9 and the decorative portion 10 are not limited thereto, and the non-decorative portions 9 and the decorative portion 10 may be provided, for example, on the outer surface 2a of the tread portion 2 or the outer surface 4a of the bead portion 4.

In the present embodiment, each non-decorative portion 9 is formed as a raised portion 9A that is raised from the outer surface 3a. The raised portion 9A includes a side surface 9b extending outward from the outer surface 3a, and a top surface 9c that is formed as a smooth surface connected to the side surface 9b. Such a top surface 9c serves to reflect light applied thereto, to make the non-decorative portion 9 look bright. Each non-decorative portion 9 is formed, for example, as a mark (for example, an emblem) that is a character, symbol, or the like representing the manufacturer name, product name, size, etc., of the tire 1.

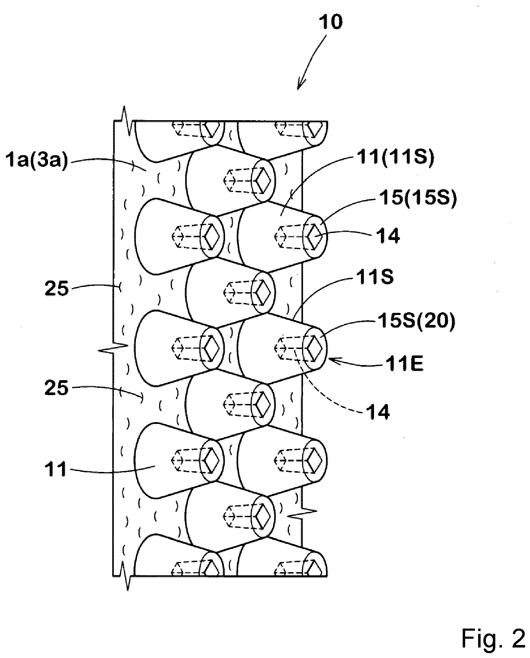

FIG. 2 is an enlarged perspective view of the decorative portion 10 in FIG. 1. As shown in FIG. 2, a plurality of micro projections 11 are arranged on the decorative portion 10 at a density of 2 to 10 projections per 1 mm² in the present embodiment.

The micro projections 11 project, for example, outward from the outer surface 3a. At least one micro projection 11 is provided with a recess 14 and an outer wall portion 15 that surrounds the recess 14 to form a projection top portion 11E and that has, for example, a tubular shape. In the present embodiment, the case where all the micro projections 11 are provided with recesses 14 and outer wall portions 15 is shown.

When light is applied to each of such micro projections 11, light applied to an outer surface 11S of the micro projection 11 diffuses, so that the decorative portion 10 looks black with a gentle tone. In addition, light applied to the projection top portion 11E is mainly reflected on an upper end surface 15S of the outer wall portion 15, and light reflection is suppressed at the recess 14. Thus, the projection top portion 11E also looks black, and thus the contrast with the non-decorative portion 9 is increased, so that the visibility of the non-decorative portion 9 is improved. This effect is more effectively exhibited when the micro projections 11 are arranged at a density of 2 to 10 projections per 1 mm². In the present embodiment, the case where the upper end surface 15S of the outer wall portion 15 is formed as a flat surface 20 orthogonal to the projection height direction is shown.

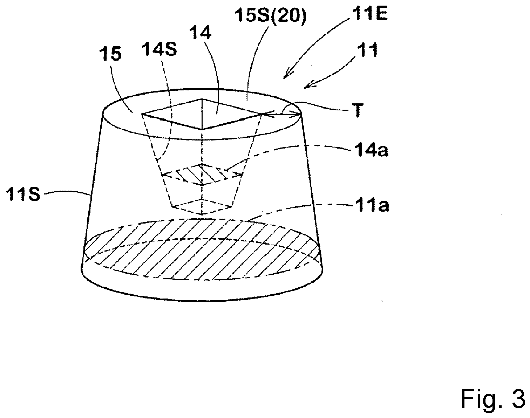

FIG. 3 is a perspective view of the micro projection 11. As shown in FIG. 3, in the embodiment, a thickness T of the outer wall portion 15 at the projection top portion 11E varies in the circumferential direction.

Here, the micro projection 11 has a first cross-sectional shape 11a orthogonal to the projection height direction, and the recess 14 has a second cross-sectional shape 14a orthogonal to the depth direction thereof. The first cross-sectional shape 11a means a contour formed by the outer surface 11S of the micro projection 11 on a cross-section of the micro projection 11 orthogonal to the projection height direction. At the upper end of the micro projection 11, the first cross-sectional shape 11a means a contour formed by the outer surface 11S when the upper end is viewed from above. Similarly, the second cross-sectional shape 14a means a contour formed by an inner surface 14S of the recess 14 on a cross-section of the recess 14 orthogonal to the depth direction. At the upper end of the micro projection 11, the second cross-sectional shape 14a means a contour formed by the inner surface 14S when the upper end is viewed from above.

The first cross-sectional shape 11a preferably has a circular shape or an elliptical shape. When the first cross-sectional shape 11a has a circular shape as in the present embodiment, light applied to the outer surface 11S from any direction can be similarly diffused at the outer surface 11S. Thus, the contrast can be stably increased without having directivity. On the other hand, when the first cross-sectional shape 11a has an elliptical shape, a difference can be made between diffusion of light applied from the major axis side of the ellipse and diffusion of light applied from the minor axis side of the ellipse. Therefore, the contrast can have directivity, so that unexpectedness can be provided to the appearance.

In the present embodiment, since the shape of the first cross-sectional shape 11a and the shape of the second cross-sectional shape 14a are different from each other, the thickness T varies in the circumferential direction. Specifically, whereas the first cross-sectional shape 11a has a circular shape, the second cross-sectional shape 14a has a polygonal shape, for example, a quadrangular shape.

Since the thickness T varies in the circumferential direction as described above, reflection on the upper end surface 15S, reflection on the outer surface 11S of the outer wall portion 15, and reflection on the inner surface 14S of the recess 14 are not uniform. Thus, combined with the above-described diffusion of light at the outer surface 1 1S and the above-described suppression of light reflection at the recess 14, the decorative portion 10 can be made to look darker (blacker) as compared to micro projections that have no recess 14 at an upper end thereof and that have, for example, a truncated cone shape. As a result, the contrast with the non-decorative portion 9 is increased, so that the visibility of the non-decorative portion 9 can be improved.

Particularly, when the second cross-sectional shape 14a has a polygonal shape, the direction of light reflection on the inner surface 14S varies greatly depending on the direction of incident light, and thus uniform reflection on the inner surface 14S can be further suppressed. Therefore, it is possible to produce a high contrast more stably.

In the micro projection 11, the first cross-sectional shape 11a is preferably smaller at the upper end side (the projection top portion 11E side) than at the lower end side (the projection root side). Such a micro projection 11 has high stiffness at the lower end side. Thus, the micro projection 11 is not easily deformed and is inhibited from being chipped or cracked, so that the visibility is maintained for a long period of time. In the present embodiment, the case where the first cross-sectional shape 11a becomes gradually smaller from the lower end side toward the upper end side is shown. More specifically, in the micro projection 11 of the present embodiment, the outer surface 11S is formed so as to be tapered from the lower end side toward the upper end side over the entire length thereof. However, the first cross-sectional shape 11a is not limited to such a mode.

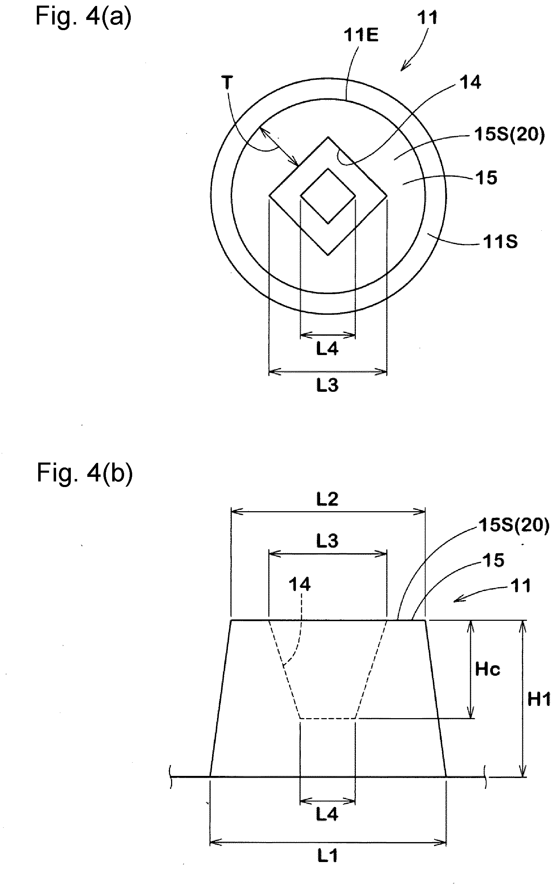

As shown in FIG. 4(b), the maximum width L1 of the micro projection 11 is preferably 0.30 to 0.70 mm. The micro projection 11 has the maximum width L1 at the lower end thereof. Such a micro projection 11 can ensure a large dark portion of shadow when light is applied. If the maximum width L1 of the micro projection 11 is less than 0.30 mm, the stiffness of the micro projection 11 becomes low and thus may be easily cracked or chipped. If the maximum width L1 of the micro projection 11 is greater than 0.70 mm, light applied to the outer surface 1 1S of the micro projection 11 increases and the outer surface 1 1S becomes brighter, so that the contrast with the non-decorative portion 9 may be decreased.

To effectively exhibit the above-described effects, the minimum width L2 of the micro projection 11 is preferably 0.25 to 0.65 mm. The micro projection 11 has the minimum width L2 at the upper end thereof. Accordingly, a dark portion can be created while stiffness is ensured.

The height H1 of the micro projection 11 is preferably 0.15 to 0.50 mm. If the height H1 is less than 0.15 mm, the micro projection 11 is excessively low, and thus the effect of light diffusion is reduced, so that the effect of making the decorative portion 10 look black is not sufficiently achieved. If the height H1 is greater than 0.50 mm, the micro projection 11 tends to be easily damaged.

The minimum value of the thickness T at the projection top portion 11E is preferably not less than 0.05 mm, and the maximum value thereof is preferably not greater than 0.2 mm. In other words, the thickness T preferably varies in the range of 0.05 to 0.20 mm. If the minimum value is less than 0.05 mm, the strength of the outer wall portion 15 becomes low, and the outer wall portion 15 tends to be easily damaged. If the maximum value is greater than 0.20 mm, reflection of light on the upper end surface 15S is increased, so that the effect of making the decorative portion 10 look black is not sufficiently achieved.

As shown in FIGS. 3 and 4(b), the second cross-sectional shape 14a is preferably larger at the upper end portion side than at the lower end portion side. Such a micro projection 11 has high stiffness at the lower end side, thus is not easily deformed, and is inhibited from being chipped or cracked. In the present embodiment, the case where the second cross-sectional shape 14a becomes gradually larger from the lower end side toward the upper end side, is shown. More specifically, in the micro projection 11 of the present embodiment, the inner surface 14S of the recess 14 is formed so as to be reversely tapered from the lower end side toward the upper end side over the entire length thereof. However, the second cross-sectional shape 14a is not limited to such a mode.

As shown in FIG. 4(b), the depth Hc of the recess 14 is preferably in the range of 15% to 100% of the height H1 of the micro projection 11. If the depth Hc is less than 15% of the height H1, light tends to be reflected on the bottom surface of the recess 14, so that the effect of making the decorative portion 10 look black is reduced. If the depth Hc is greater than 100% of the height H1, the stiffness of the micro projection 11 is decreased, so that the micro projection 11 tends to be easily damaged. Thus, the depth Hc is preferably not greater than 90% of the height H1. The depth Hc is also preferably in the range of 0.15 to 0.50 mm.

The maximum width L3 of the recess 14 is preferably 0.10 to 0.50 mm. The recess 14 has the maximum width L3 at the upper end thereof. If the maximum width L3 is less than 0.10 mm, the effect of light absorption by the recess 14 tends to be reduced. If the maximum width L3 is greater than 0.50 mm, the stiffness of the micro projection 11 is decreased, so that the micro projection 11 tends to be easily damaged.

The minimum width L4 of the recess 14 is not particularly limited, but is not greater than the maximum width L3 and preferably not greater than 70% of the maximum width L3. The recess 14 has the minimum width L4 at the lower end thereof.

As shown in FIG. 2, the decorative portion 10 preferably includes a rough-surface-like recessed and projecting portion 25 having a ten-point average roughness (Rz) of 0.01 to 0.05 mm, between the micro projections 11, 11. Such a recessed and projecting portion 25 serves to bring a shadow on the decorative portion 10 to make the decorative portion 10 look darker. In addition, such a recessed and projecting portion 25 increases the stiffness of the decorative portion 10 and inhibits chipping of the micro projections 11. The ten-point average roughness (Rz) is measured according to JISB0601 (1994).

The arrangement pitch of the micro projections 11 is preferably 0.6 to 1.0 mm. The arrangement pitch is defined as the distance between the centers of the micro projections 11. In the present embodiment, the case where the micro projections 11 are arranged in a staggered pattern is shown, but the micro projections 11 may be arranged in a lattice pattern. Alternatively, the micro projections 11 may be arranged in a random pattern as long as the arrangement pitch satisfies the above range.

The micro projections 11 are preferably provided in 50% or more of the area of the decorative portion 10, further preferably provided in 75% or more of the area of the decorative portion 10, and even more preferably provided in 100% of the area of the decorative portion 10.

When the micro projections 11 are densely arranged with a uniform size, such a decorative portion 10 looks darker, and thus the contrast becomes clear. On the other hand, when the micro projections 11 are arranged in a random pattern or with random sizes, there is an advantage that a damaged portion such as a crack or a chip becomes inconspicuous as compared to that in the case where the micro projections 11 are densely arranged.

The decorative portion 10 is formed, for example, from the same rubber as a rubber member, of the tire 1, which forms the outer surface 3a. In a method for forming such a decorative portion 10, for example, an inverted pattern of the micro projections 11 may be provided on the inner surface of a vulcanization mold for molding a tire, and the decorative portion 10 may be formed together with vulcanization molding of the tire 1. In addition, in another method for forming such a decorative portion 10, for example, the decorative portion 10 may be provided on the tire 1 by well-known mechanical processing or laser processing after vulcanization molding. For example, a well-known computer program is preferably used for the mechanical processing or laser processing.

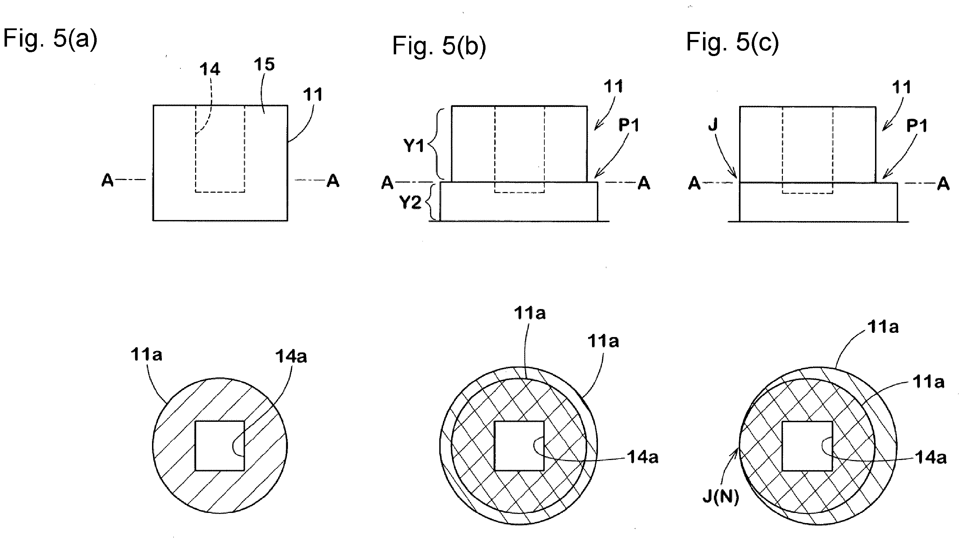

FIGS. 5(a) to (c) each show a side view of still another embodiment of the micro projection 11 and the first cross-sectional shape 11a of the micro projection 11 at a line A-A in the side view. The same components in the micro projection 11 of this embodiment and the micro projection 11 of the above-described embodiment are denoted by the same reference characters, and the detailed description thereof is omitted.

In the micro projection 11 in FIG. 5(a), for example, the first cross-sectional shape 11a is formed so as to have a uniform size from the lower end side to the upper end side. That is, the micro projection 11 has a columnar shape. Such a micro projection 11 is disadvantageous in terms of stiffness, but, similar to the tapered micro projection 11 (shown in FIGS. 3 and 4), can exhibit an effect of making the micro projection 11 look black and emphasize the contrast with the non-decorative portion 9. In addition, in this embodiment, the second cross-sectional shape 14a of the recess 14 is formed so as to have a uniform size from the lower end side to the upper end side. Such a recess 14 is disadvantageous in terms of stiffness, but, similar to the reversely tapered recess 14 (shown in FIGS. 3 and 4), can exhibit a light absorption effect and emphasize the contrast with the non-decorative portion 9.

In the micro projection 11 in FIG. 5(b), the first cross-sectional shape 11a includes a portion PI in which the first cross-sectional shape 11a becomes smaller stepwise from the lower end side toward the upper end side, that is, a step portion P1 In this embodiment, the case where there is one step is shown, but a plurality of steps may be present. Similar to the tapered micro projection 11 (shown in FIGS. 3 and 4), such a micro projection 11 can exhibit an effect of making the micro projection 11 look black and emphasize the contrast with the non-decorative portion 9 while ensuring high stiffness. In the micro projection 11 of this embodiment, a portion Y1 above the step portion P1 and a portion Y2 below the step portion P1 are each formed in a columnar shape. However, each of the portions Y1 and Y2 can also be formed in a tapered shape as shown in FIGS. 3 and 4.

In the micro projection 11 of FIG. 5(c), at a portion (step portion) P1 in which the first cross-sectional shape 11a becomes smaller stepwise, parts N of one first cross-sectional shape 11a and another first cross-sectional shape 11a are in contact with each other at a position J. Such a micro projection 11 can make the contrast have directivity and thus can provide unexpectedness to the appearance.

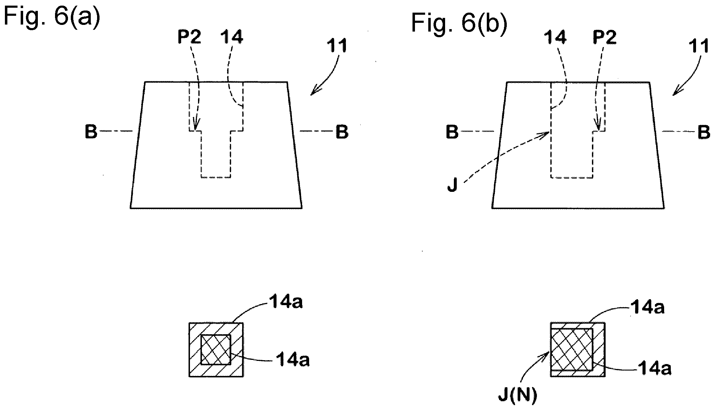

FIGS. 6(a) and (b) each show a side view of still another embodiment of the micro projection 11 and the second cross-sectional shape 14a of the recess 14 at a line B-B in the side view. The same components in the micro projection 11 of this embodiment and the micro projection 11 of the above-described embodiment are denoted by the same reference characters, and the detailed description thereof is omitted.

In FIG. 6(a), in the recess 14, the second cross-sectional shape 14a includes a portion P2 in which the second cross-sectional shape 14a becomes larger stepwise from the lower end side toward the upper end side, that is, a step portion P2. In this embodiment, the case where there is one step is shown, but a plurality of steps may be present. Similar to the reversely tapered recess 14 (shown in FIGS. 3 and 4), such a recess 14 can exhibit a light absorption effect and emphasize the contrast with the non-decorative portion 9 while ensuring high stiffness.

In the micro projection 11 in FIG. 6(b), at a portion (step portion) P2 in which the second cross-sectional shape 14a becomes larger stepwise, parts N of one second cross-sectional shape 14a and another second cross-sectional shape 14a are in contact with each other at a position J.

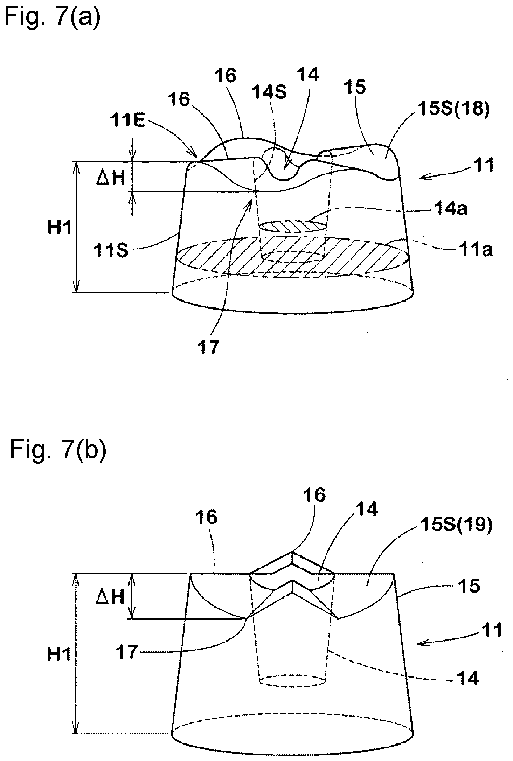

FIGS. 7(a) and (b) each show a perspective view of still another embodiment of the micro projection 11. The same components in the micro projection 11 of this embodiment and the micro projection 11 of the above-described embodiment are denoted by the same reference characters, and the detailed description thereof is omitted.

In each of the embodiments in FIGS. 7(a) and (b), the outer wall portion 15 includes at least two mountain portions 16 having a large projection height in the projection height direction. In this example, the case where the outer wall portion 15 has a tubular shape and mountain portions 16 and valley portions 17 having a small projection height are alternately provided in the circumferential direction, is shown.

In FIG. 7(a), the upper end surface 15S of the outer wall portion 15 forms a curved surface 18 in which the mountain portions 16 and the valley portions 17 are connected to each other in a wavy manner by smooth curved surfaces. However, as shown in FIG. 7(b), the upper end surface 15S of the outer wall portion 15 may be a bent surface 19 in which the mountain portions 16 and the valley portions 17 are connected to each other by inclined surfaces.

In the case of the micro projection 11 in which the upper end surface 15S is formed as a surface including a mountain portion 16 at two or more locations, light diffusion also occurs at the upper end surface 15S, so that the projection top portion 11E can be made to look blacker. The number of the mountain portions 16 formed is preferably in the range of 3 to 6 from the viewpoint of enhancing the effect of light diffusion. In this case, the height HI of the micro projection 11 is defined as a height at the mountain portion 16. In addition, the height difference ΔH between each mountain portion 16 and each valley portion 17 is preferably 0.10 to 0.40 mm.

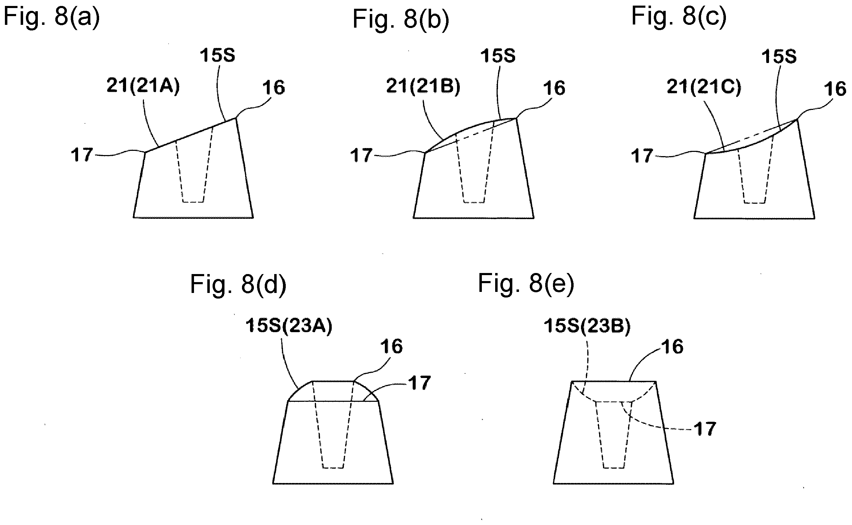

FIGS. 8(a) to (e) each show a side view of still another embodiment of the micro projection 11. The same components in the micro projection 11 of this embodiment and the micro projection 11 of the above-described embodiment are denoted by the same reference characters, and the detailed description thereof is omitted.

In each of the embodiments in FIGS. 8(a) to (e), the outer wall portion 15 includes a mountain portion 16 at one location and includes a valley portion 17 at one location.

Among these embodiments, in each of the embodiments in FIGS. 8(a) to (c), the upper end surface 15S of the outer wall portion 15 is formed as a slope 21 that is inclined relative to the projection height direction. The slope 21 has an upper end that forms the mountain portion 16, and a lower end that forms the valley portion 17. FIG. 8(a) shows the case where the slope 21 forms a flat surface 21A. In addition, FIGS. 8(b) and (c) each show the case where the slope 21 forms an arc-shaped curved surface 21B that is curved in a convex shape, or an arc-shaped curved surface 21C that is curved in a concave shape. In any of these cases, light diffusion occurs at the upper end surface 15S, so that the projection top portion 11E can be made to look blacker. In the decorative portion 10, the direction of inclination of the slope 21 of each micro projection 11 may be the same, but a plurality of types of micro projections 11 having slopes 21 inclined in different directions preferably coexist from the viewpoint of light diffusion.

Moreover, in FIG. 8(d), the upper end surface 15S of the outer wall portion 15 is formed as a spherical curved surface 23A that is curved in a convex shape. In this case, the inner peripheral edge of the curved surface 23A (upper end surface 15S) forms the mountain portion 16, and the outer peripheral edge thereof forms the valley portion 17. In FIG. 8(e), the upper end surface 15S of the outer wall portion 15 is formed as a spherical curved surface 23B that is curved in a concave shape. In this case, the outer peripheral edge of the curved surface 23B (upper end surface 15S) forms the mountain portion 16, and the inner peripheral edge thereof forms the valley portion 17. In this case as well, light diffusion occurs at the upper end surface 15S, so that the projection top portion 11E can be made to look blacker.

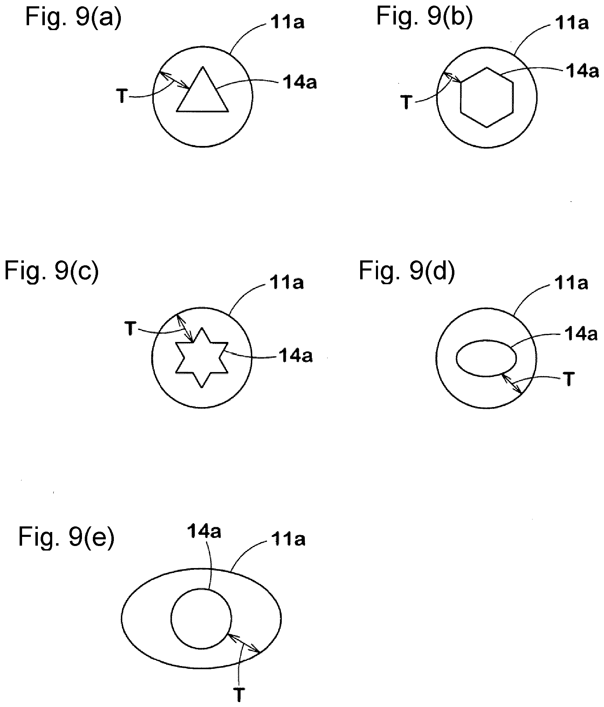

FIGS. 9(a) to (e) each show another embodiment of the first and second cross-sectional shapes 11a and 14a. In each of the embodiments in FIGS. 9(a) to (c), whereas the first cross-sectional shape 11a has, for example, a circular shape, the second cross-sectional shape 14a has a polygonal shape such as a triangular shape, a hexagonal shape, and a star shape, whereby the thickness T varies in the circumferential direction. As the polygonal shape, various polygonal shapes other than these shapes can be used. In addition, the polygonal shape also includes a shape in which projecting corner portions and recessed corner portions are formed, for example, in an arc shape by performing edge processing thereon.

In each of the embodiments in FIGS. 9(d) and (e), one of the first cross-sectional shape 11a and the second cross-sectional shape 14a has a circular shape, and the other thereof has an elliptical shape, whereby the thickness T varies in the circumferential direction. Although not shown, the first and second cross-sectional shapes 11a and 14a may each have a circular shape but the centers of the circles thereof may be displaced relative to each other, whereby the thickness T may vary in the circumferential direction.

Although the particularly preferable embodiments of the present invention have been described, the present invention can be practiced with modifications to the various embodiments without being limited to the embodiments shown in the drawings.

### EXAMPLES

In order to confirm the advantageous effects of the present invention, pneumatic tires each including non-decorative portions and a decorative portion as shown in FIGS. 1 and 2 on an outer surface of a sidewall portion thereof were produced as test tires. Each test tire was tested for visibility. The specifications other than those described in Table 1 are substantially the same for both comparative examples and examples.
Arrangement pitch of micro projections: 0.63 mm

### <Visibility>

An inspector visually observed a test tire from a side at a distance of 1 m and made sensory evaluation for visibility based on the contrast of the decorative portion. The results are indicated as scores with the score of Comparative Example 1 being regarded as 100. The higher the value is, the clearer the contrast is, and the better the visibility is. The results of the test are shown in Table 1.

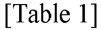

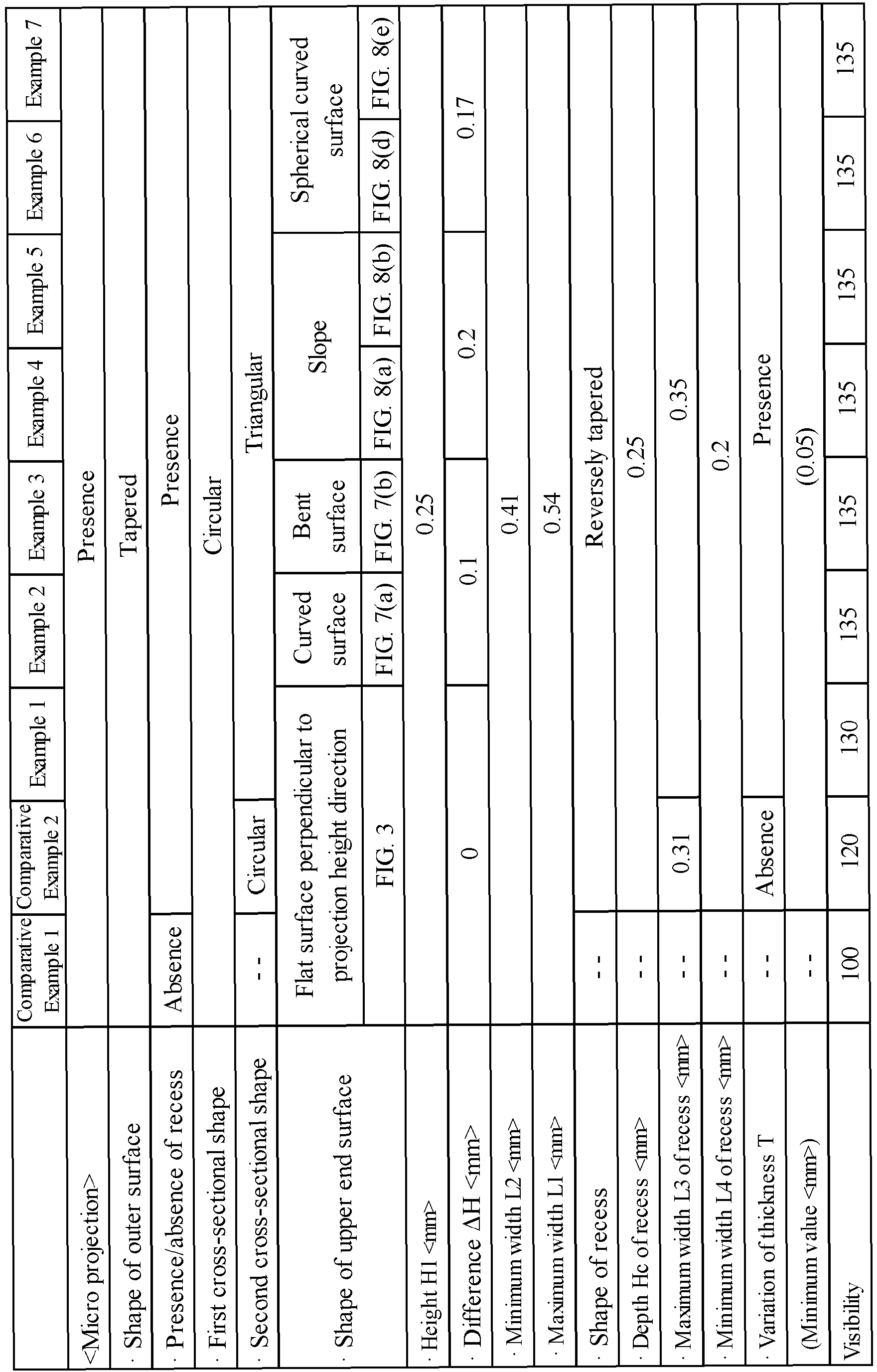

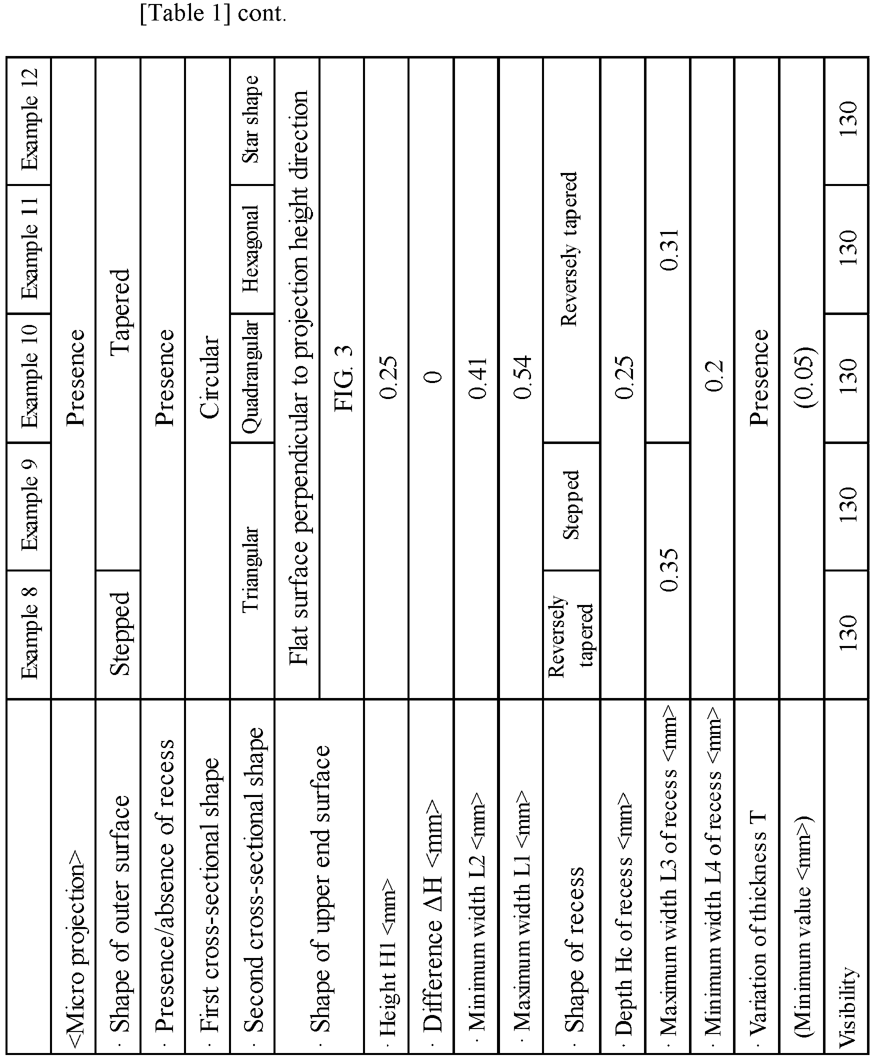

It is understood that the tires of the examples have excellent visibility as compared to the tire of Comparative Example 1. In addition, the test was conducted with the dimensions of the micro projections and the recesses being changed in preferable ranges, and similar results were obtained.

## Claims

1. A tire (1) comprising a decorative portion (10) on at least a part of a visible outer surface (1a) thereof, wherein
a plurality of micro projections (11) are arranged on the decorative portion (10) **characterized in that** at least one of the micro projections (11) includes a recess (14) and an outer wall portion (15) that surrounds the recess (14) to form a projection top portion (11E), and
a thickness (T) of the outer wall portion (15) at the projection top portion (11E) varies in a circumferential direction.

2. The tire (1) according to claim 1, wherein the micro projections (11) are arranged on the decorative portion (10) at a density of 2 to 10 projections per 1 mm².

3. The tire (1) according to claim 2, wherein
the micro projection (11) has a first cross-sectional shape (11a) orthogonal to a projection height direction, and the recess (14) has a second cross-sectional shape (14a) orthogonal to a depth direction thereof, and
the first cross-sectional shape (11a) and the second cross-sectional shape (14a) have different shapes.

4. The tire (1) according to claim 3, wherein the first cross-sectional shape (11a) has a circular shape or an elliptical shape.

5. The tire (1) according to claim 3 or 4, wherein the second cross-sectional shape (14a) has a polygonal shape.

6. The tire (1) according to any one of claims 3 to 5, wherein the first cross-sectional shape (11a) is smaller at an upper end portion side than at a lower end portion side.

7. The tire (1) according to claim 6, wherein the first cross-sectional shape (11a) includes a portion in which the first cross-sectional shape (11a) becomes gradually smaller toward the upper end portion side.

8. The tire (1) according to claim 6, wherein the first cross-sectional shape (11a) includes a portion in which the first cross-sectional shape (11a) becomes smaller stepwise toward the upper end portion side.

9. The tire (1) according to claim 8, wherein, at the portion in which the first cross-sectional shape (11a) becomes smaller stepwise, at least parts of one first cross-sectional shape (11a) and another first cross-sectional shape (11a) are in contact with each other.

10. The tire (1) according to any one of claims 1 to 9, wherein the second cross-sectional shape (14a) is larger at an upper end portion side than at a lower end portion side.

11. The tire (1) according to claim 10, wherein the second cross-sectional shape (14a) includes a portion in which the second cross-sectional shape (14a) becomes gradually larger toward the upper end portion side.

12. The tire (1) according to claim 10, wherein the second cross-sectional shape (14a) includes a portion in which the second cross-sectional shape (14a) becomes larger stepwise toward the upper end portion side.

13. The tire (1) according to claim 12, wherein, at the portion in which the second cross-sectional shape (14a) becomes larger stepwise, at least parts of one second cross-sectional shape (14a) and another second cross-sectional shape (14a) are in contact with each other.

14. The tire (1) according to any one of claims 1 to 13, wherein the decorative portion (10) includes a recessed and projecting portion (25) having a ten-point average roughness (Rz) of 0.01 to 0.05 mm, between the micro projections (11).

## Patentansprüche

1. Reifen (1), der einen dekorativen Abschnitt (10) auf mindestens einem Teil seiner sichtbaren Außenfläche (1a) aufweist, wobei
eine Vielzahl von Mikrovorsprüngen (11) auf dem dekorativen Abschnitt (10) angeordnet sind,
**dadurch gekennzeichnet, dass**
mindestens einer der Mikrovorsprünge (11) eine Ausnehmung (14) und einen Außenwandabschnitt (15) aufweist, der die Ausnehmung (14) umgibt, um einen oberen Vorsprungabschnitt (11E) zu bilden, und
eine Dicke (T) des Außenwandabschnitts (15) am oberen Vorsprungabschnitt (11E) in einer Umfangsrichtung variiert.

2. Reifen (1) nach Anspruch 1, wobei die Mikrovorsprünge (11) auf dem dekorativen Abschnitt (10) in einer Dichte von 2 bis 10 Vorsprünge pro 1 mm² angeordnet sind.

3. Reifen (1) nach Anspruch 2, wobei
der Mikrovorsprung (11) eine erste Querschnittsform (11a) orthogonal zu einer Vorsprunghöhenrichtung aufweist und die Ausnehmung (14) eine zweite Querschnittsform (14a) orthogonal zu einer Tiefenrichtung davon aufweist, und
die erste Querschnittsform (11a) und die zweite Querschnittsform (14a) unterschiedliche Formen aufweisen.

4. Reifen (1) nach Anspruch 3, wobei die erste Querschnittsform (11a) eine kreisförmige Form oder eine elliptische Form aufweist.

5. Reifen (1) nach Anspruch 3 oder 4, wobei die zweite Querschnittsform (14a) eine polygonale Form aufweist.

6. Reifen (1) nach einem der Ansprüche 3 bis 5, wobei die erste Querschnittsform (11a) auf einer Seite des oberen Endabschnitts kleiner ist als auf einer Seite des unteren Endabschnitts.

7. Reifen (1) nach Anspruch 6, wobei die erste Querschnittsform (11a) einen Abschnitt enthält, in dem die erste Querschnittsform (11a) in Richtung der Seite des oberen Endabschnitts allmählich kleiner wird.

8. Reifen (1) nach Anspruch 6, wobei die erste Querschnittsform (11a) einen Abschnitt enthält, in dem die erste Querschnittsform (11a) in Richtung der Seite des oberen Endabschnitts stufenweise kleiner wird.

9. Reifen (1) nach Anspruch 8, wobei in dem Abschnitt, in dem die erste Querschnittsform (11a) stufenweise kleiner wird, zumindest Teile einer ersten Querschnittsform (11a) und einer anderen ersten Querschnittsform (11a) miteinander in Kontakt sind.

10. Reifen (1) nach einem der Ansprüche 1 bis 9, wobei die zweite Querschnittsform (14a) auf einer Seite des oberen Endabschnitts größer ist als auf einer Seite des unteren Endabschnitts.

11. Reifen (1) nach Anspruch 10, wobei die zweite Querschnittsform (14a) einen Abschnitt enthält, in dem die zweite Querschnittsform (14a) in Richtung der Seite des oberen Endabschnitts allmählich größer wird.

12. Reifen (1) nach Anspruch 10, wobei die zweite Querschnittsform (14a) einen Abschnitt enthält, in dem die zweite Querschnittsform (14a) in Richtung der Seite des oberen Endabschnitts stufenweise größer wird.

13. Reifen (1) nach Anspruch 12, wobei in dem Abschnitt, in dem die zweite Querschnittsform (14a) stufenweise größer wird, zumindest Teile einer zweiten Querschnittsform (14a) und einer anderen zweiten Querschnittsform (14a) miteinander in Kontakt sind.

14. Reifen (1) nach einem der Ansprüche 1 bis 13, wobei der dekorative Abschnitt (10) einen vertieften und vorstehenden Abschnitt (25) mit einer durchschnittlichen Zehn-Punkte-Rauheit (Rz) von 0,01 bis 0,05 mm zwischen den Mikrovorsprüngen (11) aufweist.

## Revendications

1. Pneumatique (1) comprenant une portion décorative (10) sur au moins une partie d'une surface extérieure visible (1a) de celui-ci, dans lequel une pluralité de micro-projections (11) sont agencées sur la portion décorative (10),
**caractérisé en ce que**
au moins une des micro-projections (11) inclut un évidement (14) et une portion formant paroi extérieure (15) qui entoure l'évidement (14) pour former une portion supérieure en projection (11E), et
une épaisseur (T) de la portion formant paroi extérieure (15) au niveau de la portion supérieure en projection (11E) varie dans une direction circonférentielle.

2. Pneumatique (1) selon la revendication 1, dans lequel les micro-projections (11) sont agencées sur la portion décorative (10) à une densité de 2 à 10 projections par 1 mm².

3. Pneumatique (1) selon la revendication 2, dans lequel la micro-projection (11) a une première forme de section transversale (11a) orthogonale à une direction en hauteur, et l'évidement (14) a une seconde forme de section transversale (14a) orthogonale à une direction en profondeur de celui-ci, et
la première forme de section transversale (11a) et la seconde forme de section transversale (14a) ont des formes différentes.

4. Pneumatique (1) selon la revendication 3, dans lequel la première forme de section transversale (11a) a une forme circulaire ou une forme elliptique.

5. Pneumatique (1) selon la revendication 3 ou 4, dans lequel la seconde forme de section transversale (14a) a une forme polygonale.

6. Pneumatique (1) selon l'une quelconque des revendications 3 à 5, dans lequel la première forme de section transversale (11a) est plus petite au niveau d'un côté de portion d'extrémité supérieure qu'au niveau d'un côté de portion d'extrémité inférieure.

7. Pneumatique (1) selon la revendication 6, dans lequel la première forme de section transversale (11a) inclut une portion dans laquelle la première forme de section transversale (11a) devient graduellement plus petite vers le côté de portion d'extrémité supérieure.

8. Pneumatique (1) selon la revendication 6, dans lequel la première forme de section transversale (11a) inclut une portion dans laquelle la première forme de section transversale (11a) devient plus petite par paliers vers le côté de portion d'extrémité supérieure.

9. Pneumatique (1) selon la revendication 8, dans lequel, au niveau de la portion dans laquelle la première forme de section transversale (11a) devient plus petite par paliers, au moins des parties d'une première forme de section transversale (11a) et d'une autre première forme de section transversale (11a) sont en contact l'une avec l'autre.

10. Pneumatique (1) selon l'une quelconque des revendications 1 à 9, dans lequel la seconde forme de section transversale (14a) est plus grande au niveau d'un côté de portion d'extrémité supérieure qu'au niveau d'un côté de portion d'extrémité inférieure.

11. Pneumatique (1) selon la revendication 10, dans lequel la seconde forme de section transversale (14a) inclut une portion dans laquelle la seconde forme de section transversale (14a) devient graduellement plus grande vers le côté de portion d'extrémité supérieure.

12. Pneumatique (1) selon la revendication 10, dans lequel la seconde forme de section transversale (14a) inclut une portion dans laquelle la seconde forme de section transversale (14a) devient plus grande par paliers vers le côté de portion d'extrémité supérieure.

13. Pneumatique (1) selon la revendication 12, dans lequel, au niveau de la portion dans laquelle la seconde forme de section transversale (14a) devient plus grande par paliers, au moins des parties d'une seconde forme de section transversale (11a) et d'une autre seconde forme de section transversale (14a) sont en contact l'une avec l'autre.

14. Pneumatique (1) selon l'une quelconque des revendications 1 à 13, dans lequel la portion décorative (10) inclut une portion évidée et en projection (25) ayant une rugosité moyenne en dix points (Rz) de 0,01 à 0,05 mm entre les micro-projections (11).
